# EUROPÄISCHE PATENTSCHRIFT

(11) **EP 3 409 600 B1**
(45) Veröffentlichungstag und Bekanntmachung des Hinweises auf die Patenterteilung: **11.12.2019**
(21) Anmeldenummer: 17174272.9
(22) Anmeldetag: 02.06.2017
(51) Int. Cl.: B65B 11/52, B65B 31/02, B65B 31/04, B65B 51/10, B65B 7/16, B65B 9/04, B65B 57/04, B65B 57/18, B29C 51/10, G01M 3/26, B29L 31/00, B29C 51/20, B29C 51/26, B29C 51/46, B65B 57/00, G01M 3/32, B65B 47/10

(54) **SCHALENVERSCHLIESSMASCHINE**
TRAY SEALING MASCHINE
SCELLEUSE DE BARQUETTES

(43) Veröffentlichungstag der Anmeldung: 05.12.2018
(73) Patentinhaber: MULTIVAC Sepp Haggenmüller SE & Co. KG, 87787 Wolfertschwenden (DE)
(72) Erfinder: CAPRIOTTI, Luciano, 87730 Bad Grönenbach (DE); JUNG, Patrick, 87435 Kempten (DE)
(74) Vertreter: Grünecker Patent- und Rechtsanwälte PartG mbB

(56) Entgegenhaltungen:
- EP-A1- 0 277 458
- WO-A1-2007/122201
- WO-A1-2008/022815
- US-A1- 2009 071 100

## Beschreibung

Die Erfindung bezieht sich auf eine Schalenverschließmaschine zum Tiefziehen einer skinfähigen Oberfolie gemäß dem Anspruch 1 sowie auf ein Verfahren gemäß Anspruch 6.

Die WO 2015091404 A1 offenbart eine Schalenverschließmaschine zum Versiegeln einer Schale mit einer skinfähigen Oberfolie. Die Oberfolie wird dabei mittels einer relativ zum Domwerkzeug bewegbaren Domplatte erwärmt und zum Formen durch die Domplatte selbst in das Domwerkzeug gezogen. Die bewegbare und beheizbare Domplatte stellt einen hohen konstruktiven Aufwand dar.

Aus der EP 2815983 A1 ist eine Schalenverschließmaschine bekannt, die in ähnlicher Weise dazu konfiguriert ist, eine skinfähige Oberfolie durch Anlegen an einer erwärmten Innenwand eines domförmigen Werkzeugs zu erwärmen. Dabei wird in einem ersten Schritte erwärmte Luft über das Siegelwerkzeug durch das Domwerkzeug hindurch an die Oberfolie geführt und anschließend diese Luft über die gemeinsamen Leitungen dem Raum zwischen Siegelwerkzeugoberteil und vorgewärmter Oberfolie entzogen. Diese Vorgangskombination von Überdruck und Evakuieren ist nachteilig bezüglich der benötigten Zeitdauer bis zum Ende des Tiefziehvorgangs im Domwerkzeug.

Die US 2009/071100 beschreibt eine Tiefziehstation zum Tiefziehen einer Schale in eine Unterfolie bei welcher der Druckverlauf auf beiden Seiten der Folie vorgegeben, gemessen und korrigiert werden kann. Ferner wird in dieser Druckschrift beschrieben dass ein geringfügiger Druckabfall infolge einer Leckage auftreten kann. Diese Leckage wird jedoch nicht als Leckage aufgrund eines Defekts oder einer Perforation der Folie beschrieben.

Aufgabe der Erfindung ist es, eine verbesserte Schalenverschließmaschine zum Versiegeln einer Schale mit einer skinfähigen Oberfolie zur Verfügung zu stellen.

Diese Aufgabe wird gelöst durch eine Schalenverschließmaschine zum Tiefziehen einer skinfähigen Oberfolie mit den Merkmalen des Anspruchs 1 sowie durch ein Verfahren gemäß Anspruch 6. Vorteilhafte Weiterbildungen der Erfindung sind in den Unteransprüchen angegeben.

Die erfindungsgemäße Schalenverschließmaschine umfasst eine Steuerung und eine Siegelstation, die ein Werkzeugoberteil, einen Klemmrahmen und ein Werkzeugunterteil umfasst, wobei im Inneren des Werkzeugoberteils ein Domwerkzeug zum Verformen einer skinfähigen Oberfolie, vorzugsweise einer Oberfolie mit einer Stärke von weniger als 200 µm, angeordnet ist. Das Domwerkzeug weist wenigstens einen ersten Kanal auf, das Werkzeugoberteil einen zweiten Kanal und das Domwerkzeug eine innere Anlagefläche. Der Klemmrahmen ist dazu konfiguriert, die Oberfolie an das Werkzeugoberteil gasdicht zu klemmen, um eine obere Kammer innerhalb des Werkzeugoberteils zu bilden. Die Erfindung zeichnet sich dadurch aus, dass zwischen dem Domwerkzeug und einem Vakuumerzeuger ein Vakuumsensor (Drucksensor) vorgesehen ist, der mit der Steuerung verbunden ist, wobei die Steuerung dazu konfiguriert ist, anhand des Druckverlaufs einen Folienriss zu erkennen. Beispielsweise kann die Oberfolie in das Domwerkzeug tiefgezogen werden und ein möglicher Folienriss, der beim Tiefziehprozess entsteht, würde erkannt werden. Hierzu wird z.B. ein mittels des Vakuumsensors ermittelter Druckverlauf mit einem vorgegebenen bzw. zu erwartenden Druckverlauf verglichen. Sollte der ermittelte Druckverlauf eine Abweichung vom vorgegebenen Druckverlauf aufweisen und die Abweichung größer sein als eine vorgegeben Toleranz, so interpretiert die Steuerung dies als Anzeichen für einen Folienriss. Die Abweichung kann während des gesamten Tiefziehprozesses erfasst werden. Die Abweichung kann z.B. in Form eines Druckanstiegs oder einer zu geringen Steigung der Evakuierungskurve vorliegen und durch einen Folienriss verursacht sein. Es ist auch denkbar, dass ein vorgegebener Endvakuumwert aufgrund eines Folienrisses nicht erreicht wird und dies als Anzeichen für einen Folienriss gewertet wird.

Ein solcher Folienriss entsteht bevorzugt durch eine ungleiche Temperaturverteilung in der Skinfolie, da durch die Strahlungswärme der Siegelfläche die Skinfolie in diesem Bereich stärker als anderen Bereichen erwärmt wird. Besonders beim Kontakt der Skinfolie mit der Siegelfläche während des Tiefziehprozesses kann sich dies negativ auswirken und einen Folienriss hervorrufen. Ebenso würde eine bereits vorgeschädigte Folie beim Tiefziehprozess erkannt werden. Somit wird verhindert, dass fehlerhafte Packungen erzeugt werden, die zu einem späteren Zeitpunkt ausgeschleust werden müssen, oder dass der Prozess nicht gültig beendet werden kann, da beispielsweise ein Endvakuum aufgrund der Undichtigkeit der Oberfolie vor dem Verskinnen nicht oder erst nach langer Zeit erreicht wird. Denkbar ist auch, die teils verformte Oberfolie weiter zu transportieren und einen neuen Tiefziehprozess mit einem neuen Folienabschnitt auszuführen.

Vorzugsweise weist das Domwerkzeug eine Vielzahl von Entlüftungskanälen auf, um die Oberfolie gleichmäßig und schnell in das Innere des Domwerkzeugs tiefzuziehen. Über die Entlüftungskanäle kann das Siegelwerkzeug auch belüftet werden, damit sich die Oberfolie nach unten am Produkt und die Innenseiten sowie auf dem Schalenrand anlegen kann.

Bevorzugt weist das Domwerkzeug eine Siegelfläche auf, um die Oberfolie mittels Druck und Wärme auf den Schalenrand der Schale zu siegeln.

Dabei ist das Domwerkzeug in einer vorteilhaften Ausführung zwischen einer oberen Stellung zum Verformen der skinfähigen Oberfolie und einer unteren Stellung zum Siegeln der Oberfolie auf den Schalenrand wenigstens einer Schale bewegbar.

Vorzugsweise ist eine Dichtung an einem Übergang des ersten Kanals vom Domwerkzeug zum zweiten Kanal des Werkzeugoberteils vorgesehen, um die Kammer zu evakuieren. Die Dichtung kann auch dann vorgesehen sein, wenn die Oberfolie an der Unterseite des Domwerkzeugs anliegt und die Kammer in zwei Bereiche teilt. Eine Teilkammer befindet sich zwischen Oberfolie und Siegelwerkzeug aber außerhalb des Domwerkzeugs und eine zweite Teilkammer wird durch das Innere des Domwerkzeugs und der Oberfolie gebildet.

Das erfindungsgemäße Verfahren zum Betrieb einer Schalenverschließmaschine, die eine Steuerung sowie eine Siegelstation aufweist, die ein Werkzeugoberteil, einen Klemmrahmen und ein Werkzeugunterteil umfasst, wobei das Werkzeugoberteil ein Domwerkzeug zum Verformen einer skinfähigen Oberfolie aufnimmt, wobei das Domwerkzeug wenigstens einen ersten Kanal aufweist, wobei das Werkzeugoberteil einen zweiten Kanal aufweist, wobei das Domwerkzeug eine innere Anlagefläche aufweist, und wobei der Klemmrahmen dazu konfiguriert ist, die Oberfolie an das Werkzeugoberteil gasdicht zu klemmen, um eine Kammer innerhalb des Werkzeugoberteils zu bilden, zeichnet sich dadurch aus, dass mittels eines Vakuumsensors, der zwischen dem Domwerkzeug und einem Vakuumerzeuger vorgesehen ist, ein Unterdruck gemessen wird und die Steuerung anhand des Druckverlaufs einen Folienriss erkennt.

Bevorzugt zeigt bei einem erkannten Folienriss die Steuerung eine Meldung an einem Display an. So wird der Bediener über den Grund der Prozessunterbrechung informiert und kann bei Bedarf für den nächsten neuen Tiefziehprozess Parameter anpassen, um einen weiteren Folienriss zu vermeiden.

Vorzugsweise startet bei einem erkannten Folienriss die Steuerung einen Siegelvorgang nicht oder bricht diesen ab, da diese Packungen zumindest teilweise defekt und damit unbrauchbar sind.

In einer vorteilhaften Ausführung wird bei einem erkannten Folienriss das Werkzeugoberteil belüftet und die Oberfolie in Transportrichtung weitertransportiert, um in einem weiteren Versuch einen nachfolgenden neuen Folienabschnitt in das Domwerkzeug tiefzuziehen. Denkbar hierbei ist beispielsweise ein Abbruch des Verpackungsprozesses nach dreimaligem Folienriss in Folge, um Prozessparameter anzupassen oder nach anderen Fehlergründen zu suchen.

Optional wird mittels des Druckverlaufs das Anliegen der Oberfolie an der inneren Anlagefläche des Domwerkzeugs erkannt und der nächste Prozessschritt gestartet oder eingeleitet. So kann auf Zeiteinstellungen mit üblichen zusätzlichen Sicherheitsreserven verzichtet werden.

Im Folgenden wird ein vorteilhaftes Ausführungsbeispiel der Erfindung anhand einer Zeichnung näher dargestellt. Im Einzelnen zeigen:
- Fig. 1: eine Schalenverschließmaschine,
- Fig. 2: eine erfindungsgemäße Siegelstation in geöffneter Stellung,
- Fig. 3: die Siegelstation während des Tiefziehvorgangs und
- Fig. 4: die Siegelstation mit tiefgezogener Oberfolie.

Gleiche Komponenten sind in den Figuren durchgängig mit gleichen Bezugszeichen versehen.

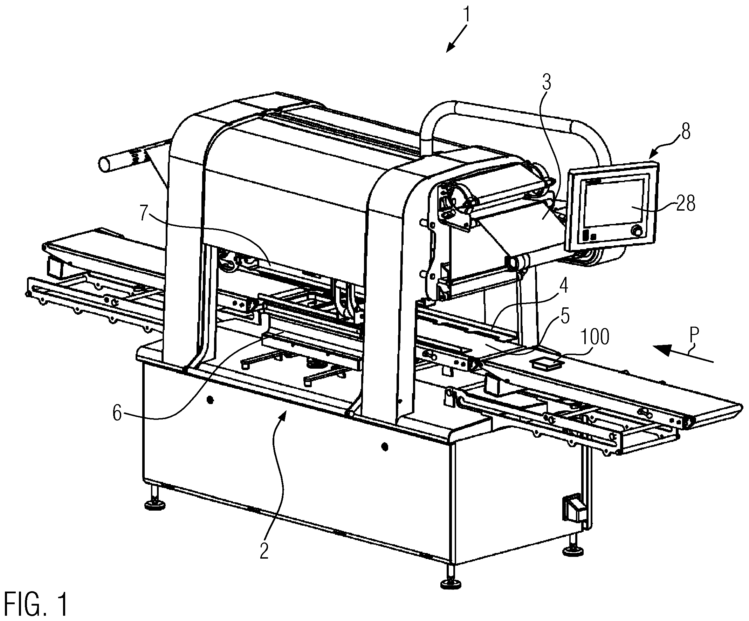

Figur 1 zeigt eine Schalenversiegelungsmaschine 1 mit einer Siegelstation 2, die Schalen 100 mit einer Oberfolie 3 versiegelt, und einem Greifersystem 4, das die Schalen 100 in einer Transportrichtung P von einem Zuführförderer 5 in die Siegelstation 2 bewegt. Die Siegelstation 2 weist ein Werkzeugunterteil 6 und ein darüber angeordnetes Werkzeugoberteil 7 auf. Eine Steuerung 8 steuert und überwacht alle Vorgänge in der Schalenversiegelungsmaschine 1. Die Siegelstation 2 ist zum Versiegeln von mehreren Schalen 100 vorgesehen. Dies kann mehrreihig und/oder mehrspurig erfolgen, wobei mehrreihig bedeutet, dass mehrere Schalen 100 aufeinanderfolgend in Transportrichtung P vorgesehen sind, und mehrspurig bedeutet, dass zwei oder mehr in Transportrichtung P parallel nebeneinander angeordnete Spuren von Schalen 100 vorgesehen sind.

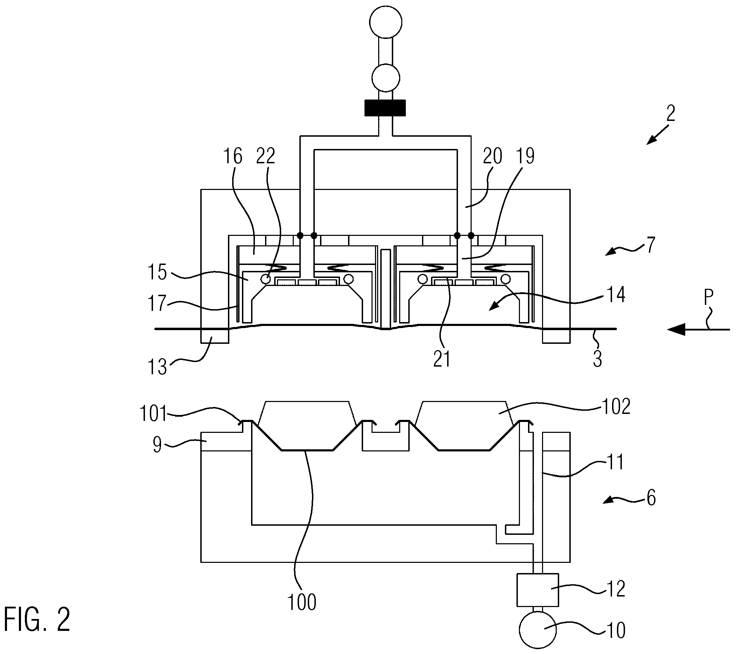

Fig. 2 zeigt die erfindungsgemäße Siegelstation 2 in geöffneter Stellung, bei der das Werkzeugunterteil 6 zum Werkzeugoberteil 7 beabstandet ist und dazwischen die Oberfolie 3 in der Transportrichtung P hindurchgeführt ist. Das Werkzeugunterteil 6 umfasst eine Schalenaufnahme 9 und ist mit einem Vakuumerzeuger 10, beispielsweise mit einer Vakuumzentraleinheit oder mit einer Vakuumpumpe, über eine Vakuumleitung 11 und ein erstes Ventil 12 verbunden, um ein Evakuieren des Packungsinneren vor dem Verschließen zu ermöglichen. Ein Klemmrahmen 13 ist zwischen Werkzeugunterteil 6 und Werkzeugoberteil 7 vorgesehen, um die Oberfolie 3 gegen das Werkzeugoberteil 7 außen umlaufend gas- und druckdicht zu klemmen und so eine Kammer 14 zwischen Oberfolie 3 und Werkzeugoberteil 7 zu bilden.

Das glockenförmige Werkzeugoberteil 7 nimmt in seinem Inneren ein Domwerkzeug 15 und eine Druckplatte 16 auf, wobei eine Schneidvorrichtung 17 an der Druckplatte 16 angeordnet ist, um die Oberfolie 3 außerhalb des Domwerkzeugs 15 entlang eines Schalenrands 101 der Schale 100 rings umlaufend zu schneiden. In der Schale 100 ist ein über den Schalenrand 101 nach oben überstehendes Produkt 102 gezeigt. Denkbar sind auch Produkte 102, die nicht über den Schalenrand 101 überstehen.

Das Domwerkzeug 15 weist einen ersten Kanal 19 auf, der in Fluidverbindung mit einem zweiten Kanal 20 gebracht werden kann, der die Wand des glockenförmigen Werkzeugoberteils 7 durchdringt. Über die beiden Kanäle 19, 20 kann der Kammer 14 Luft zugeführt oder entzogen werden. Der Kanal 19 kann als Rohr ausgeführt sein und durch die Druckplatte 16 hindurch bis an oder in das Werkzeugoberteil 7 reichen, während sich das Domwerkzeug 15 in seiner oberen Stellung befindet. Das Domwerkzeug 15 selbst weist Kanäle 21 auf, über die ein Vakuum zwischen Domwerkzeug 15 und der Oberfolie 3 erzeugt werden kann sowie für den eigentlichen Skinvorgang, bei dem sich die Oberfolie 3 wie eine Haut an das Produkt 102 anlegt, Luft vom ersten Kanal 19 durch das Domwerkzeug 15 in die Kammer 14 strömen kann.

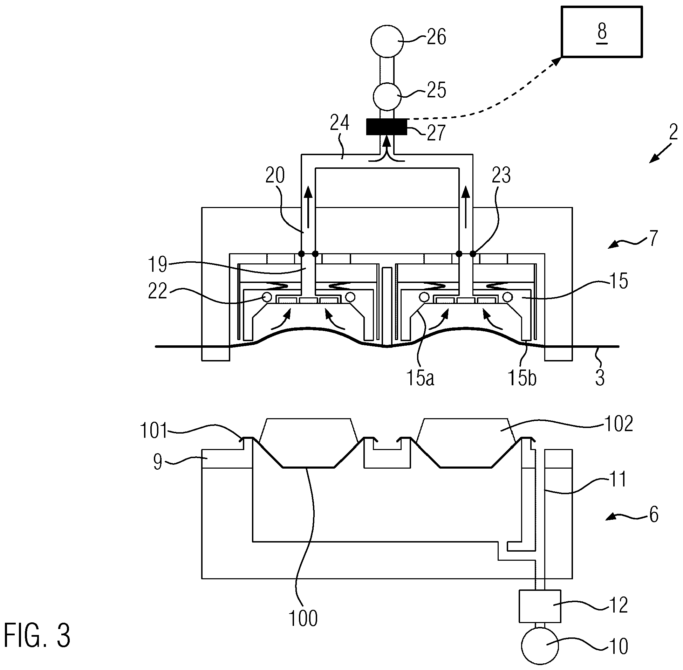

Fig. 3 zeigt die Siegelstation 2, bei der der Klemmrahmen 13 die Oberfolie 3 nach oben an das Siegelwerkzeugoberteil 7 gasdicht umlaufend klemmt. Der erste Kanal 19 ist in dieser oberen Position des Domwerkzeugs 15 zum Werkzeugoberteil 7 mittels einer Dichtung 23 mit dem zweiten Kanal 20 verbunden. Der zweite Kanal 20 wiederum ist über die Leitung 24 mit einem zweiten Ventil 25 verbunden. An dem zweiten Ventil 25 ist ein Vakuumerzeuger 26, beispielsweise eine Vakuumzentraleinheit oder eine Vakuumpumpe, über eine Leitung 24 dazu vorgesehen, bei Anlegen eines Unterdrucks die skinfähige Oberfolie 3 in einen inneren Bereich des Domwerkzeugs 15 tiefzuziehen. Über die Entlüftungskanäle 21 wird Luft in Pfeilrichtung entzogen.

Während des Prozesses, bei dem die Oberfolie 3 mittels des durch den Vakuumerzeuger 26 erzeugten Unterdrucks zwischen der Oberfolie 3 und dem Inneren des Domwerkzeugs 15 an die Innenseiten des Domwerkzeugs 15 tiefgezogen wird, besteht beispielsweise die Gefahr, dass die Oberfolie 3 reißt. Ein Vakuumsensor 27, der in der Leitung 24 oder im zweiten Kanal 20 vorgesehen ist, übermittelt seine Messwerte an die Steuerung 8, die den Druckverlauf verfolgt und auswertet. Sollte der vorgesehene Druckverlauf einen zu erwartenden Zielwert nicht in einer vorgegeben Zeit erreichen oder beispielsweise einen Druckanstieg oder eine gegenüber einem theoretischen Druckverlauf abweichende Druckveränderung aufweisen, so wird dieses Verhalten als Anzeichen für einen Folienriss interpretiert und der Evakuiervorgang abgebrochen und eine Meldung auf einem Display 28 angezeigt. Der Vakuumsensor (Drucksensor) 27 ist bevorzugt für einen Meßbereich von 0 bis 1 bar ausgelegt.

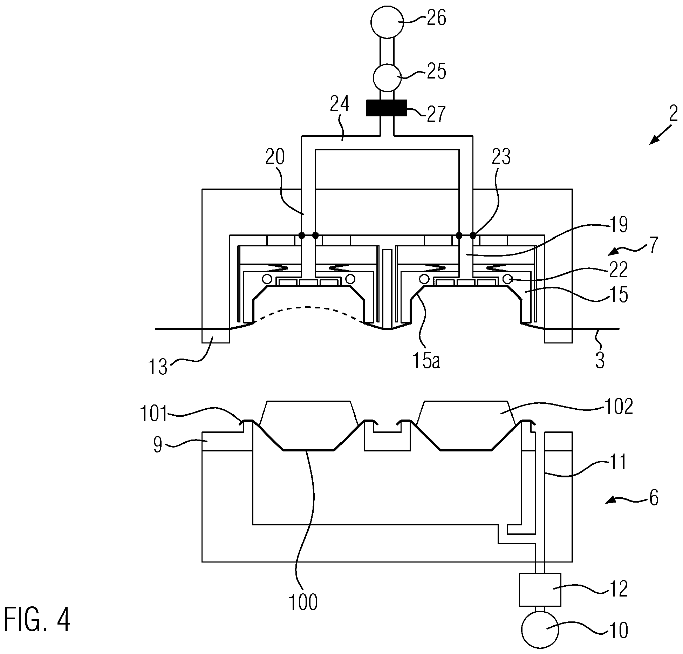

Fig. 4 zeigt die tiefgezogene Oberfolie 3, die an inneren Anlageflächen 15a des Domwerkzeugs 15 anliegt. Durch die Heizelemente 22 im Domwerkzeug 15 wird die Oberfolie 3 auf eine Temperatur erwärmt, die für den nachfolgenden Skinvorgang notwendig ist.

Um die Oberfolie 3 bei einem späteren Siegelvorgang auf den Schalenrand 101 anzusiegeln, weist das Domwerkzeug 15 eine an seiner Unterseite umlaufende Siegelfläche 15b auf, die kongruent zum Schalenrand 101 ausgebildet ist.

## Patentansprüche

1. Schalenverschließmaschine (1) mit einer Steuerung (8), einer Siegelstation (2), die ein Werkzeugoberteil (7), einen Klemmrahmen (13) und ein Werkzeugunterteil (6) umfasst, wobei im Inneren des Werkzeugoberteils (7) ein Domwerkzeug (15) zum Verformen einer skinfähigen Oberfolie (3) angeordnet ist, wobei das Domwerkzeug (15) wenigstens einen ersten Kanal (19) aufweist, wobei das Werkzeugoberteil (7) einen zweiten Kanal (20) aufweist, wobei das Domwerkzeug (15) eine innere Anlagefläche (15a) aufweist, und wobei der Klemmrahmen (13) dazu konfiguriert ist, die Oberfolie (3) an das Werkzeugoberteil (7) gasdicht zu klemmen, um eine obere Kammer (14) innerhalb des Werkzeugoberteils (7) zu bilden, **dadurch gekennzeichnet, dass** zwischen dem Domwerkzeug (15) und einem Vakuumerzeuger (26) ein Vakuumsensor (27) vorgesehen ist, der mit der Steuerung (8) verbunden ist, wobei die Steuerung (8) dazu konfiguriert ist, anhand des Druckverlaufs einen Folienriss zu erkennen.

2. Schalenverschließmaschine nach Anspruch 1, **dadurch gekennzeichnet, dass** das Domwerkzeug (7) eine Vielzahl von Entlüftungskanälen (21) aufweist.

3. Schalenverschließmaschine nach einem der vorangehenden Ansprüche, **dadurch gekennzeichnet, dass** das Domwerkzeug (15) eine Siegelfläche (15b) aufweist.

4. Schalenverschließmaschine nach Anspruch 3, **dadurch gekennzeichnet, dass** das Domwerkzeug (15) zwischen einer oberen Stellung zum Verformen der skinfähigen Oberfolie (3) und einer unteren Stellung zum Siegeln der Oberfolie (3) auf einen Schalenrand (101) wenigstens einer Schale (100) bewegbar ist.

5. Schalenverschließmaschine nach einem der vorangehenden Ansprüche, **dadurch gekennzeichnet, dass** eine Dichtung (23) an einem Übergang des ersten Kanals (19) vom Domwerkzeug (15) zum zweiten Kanal (20) des Werkzeugoberteils (7) vorgesehen ist.

6. Verfahren zum Betrieb einer Schalenverschließmaschine (1), wobei die Schalenverschließmaschine (1) eine Steuerung (8) aufweist sowie eine Siegelstation (2), die ein Werkzeugoberteil (7), einen Klemmrahmen (13) und ein Werkzeugunterteil (6) umfasst, wobei das Werkzeugoberteil (7) ein Domwerkzeug (15) zum Verformen einer skinfähigen Oberfolie (3) aufnimmt, wobei das Domwerkzeug (15) wenigstens einen ersten Kanal (19) aufweist, wobei das Werkzeugoberteil (7) einen zweiten Kanal (20) aufweist, wobei das Domwerkzeug (15) eine innere Anlagefläche (15a) aufweist, und wobei der Klemmrahmen (13) dazu konfiguriert ist, die Oberfolie (3) an das Werkzeugoberteil (7) gasdicht zu klemmen, um eine Kammer (14) innerhalb des Werkzeugoberteils (7) zu bilden, **dadurch gekennzeichnet, dass** mittels eines Vakuumsensors (27), der zwischen dem Domwerkzeug (15) und einem Vakuumerzeuger (26) vorgesehen ist, ein Unterdruck gemessen wird und die Steuerung (8) anhand des Druckverlaufs einen Folienriss erkennt.

7. Verfahren nach Anspruch 6, **dadurch gekennzeichnet, dass** bei einem erkannten Folienriss die Steuerung (8) eine Meldung an einem Display (28) anzeigt.

8. Verfahren nach einem der Ansprüche 6 bis 7, **dadurch gekennzeichnet, dass** bei einem erkannten Folienriss die Steuerung (8) einen Siegelvorgang nicht startet oder abbricht.

9. Verfahren nach einem der Ansprüche 6 bis 8, **dadurch gekennzeichnet, dass** bei einem erkannten Folienriss das Werkzeugoberteil (7) belüftet wird und die Oberfolie (3) in Transportrichtung (P) weitertransportiert wird, um einen nachfolgenden Abschnitt der Oberfolie (3) in das Domwerkzeug (15) tiefzuziehen.

10. Verfahren nach einem der vorangehenden Ansprüche 6 bis 9, **dadurch gekennzeichnet, dass** mittels des Druckverlaufs das Anliegen der Oberfolie (3) an der inneren Anlagefläche (15a) des Domwerkzeugs (15) erkannt wird.

## Claims

1. A tray sealer (1) including a control unit (8) and a sealing station (2), which comprises a tool upper part (7), a clamping frame (13) and a tool lower part (6), wherein the interior of the tool upper part (7) has arranged therein a dome-shaped die (15) for deforming a skinnable top film (3), wherein the dome-shaped die (15) comprises at least a first channel (19), wherein the tool upper part (7) comprises a second channel (20), wherein the dome-shaped die (15) has an inner con-tact surface (15a), and wherein the clamping frame (13) is configured to clamp the top film (3) in position on the tool upper part (7) in a gas-tight manner so as to define an upper chamber (14) within the tool upper part (7), **characterized in that** a vacuum sensor (27), which is connected to the control unit (8), is provided between the dome-shaped die (15) and a vacuum generator (26), the control unit (8) being configured to detect a tear in the film on the basis of the pressure profile.

2. The tray sealer according to claim 1, **characterized in that** the dome-shaped die (15) comprises a plurality of venting ducts (21).

3. The tray sealer according to one of the preceding claims, **characterized in that** the dome-shaped die (15) has a sealing surface (15b).

4. The tray sealer according to claim 3, **characterized in that** the dome-shaped die (15) is movable between an upper position for deforming the skinnable top film (3) and a lower position for sealing the top film (3) onto a tray edge (101) of at least one tray (100).

5. The tray sealer according to one of the preceding claims, **characterized in that** a seal (23) is provided at a transition of the first channel (19) from the dome-shaped die (15) to the second channel (20) of the tool upper part (7).

6. A method of operating a tray sealer (1), wherein the tray sealer (1) includes a control unit (8) as well as a sealing station (2) comprising a tool upper part (7), a clamping frame (13) and a tool lower part (6), wherein the tool upper part (7) receives therein a dome-shaped die (15) for deforming a skinnable top film (3), wherein the dome-shaped die (15) comprises at least a first channel (19), wherein the tool upper part (7) comprises a second channel (20), wherein the dome-shaped die (15) has an inner contact surface (15a), and wherein the clamping frame (13) is configured to clamp the top film (3) in position on the tool upper part (7) in a gas-tight manner so as to define a chamber (14) within the tool up-per part (7), **characterized in that**, by means of a vacuum sensor (27) provided between the dome-shaped die (15) and a vacuum generator (26), a negative pressure is measured, and that the control unit (8) detects a tear in the film on the basis of the pressure profile.

7. The method according to claim 6, **characterized in that**, when a tear in the film is detected, the control unit (8) will show a message on a display (28).

8. The method according to one of the claims 6 to 7, **characterized in that**, when a tear in the film is detected, the control unit (8) will not start or will discontinue a sealing process.

9. The method according to one of the claims 6 to 8, **characterized in that**, when a tear in the film is detected, air will be supplied to the tool upper part (7) and the top film (3) will be advanced in the conveying direction (P) so as to thermoform a subsequent section of the top film (3) into the dome-shaped die (15).

10. The method according to one of the preceding claims 6 to 9, **characterized in that**, by means of the pressure profile, it is detected that the top film (3) is in contact with the inner contact surface (15a) of the dome-shaped die (15).

## Revendications

1. Machine de fermeture de barquettes (1) comprenant une commande (8), un poste de scellage (2), qui englobe une partie supérieure d'outillage (7), un cadre de serrage (13) et une partie inférieure d'outillage (6), machine
dans laquelle à l'intérieur de la partie supérieure d'outillage (7) est agencé un outil en dôme (15) pour le formage d'une feuille supérieure (3) personnalisable, dans laquelle l'outil en dôme (15) présente au moins un premier canal (19),
dans laquelle la partie supérieure d'outillage (7) présente un deuxième canal (20),
dans laquelle l'outil en dôme (15) présente une surface d'appui intérieure (15a),
et dans laquelle le cadre de serrage (13) est configuré pour serrer, de manière étanche aux gaz, la feuille supérieure (3) contre la partie supérieure d'outillage (7), en vue de former une chambre supérieure (14) à l'intérieur de la partie supérieure d'outillage (7),
**caractérisée en ce qu'**entre l'outil en dôme (15) et un générateur de vide (26), est prévu un détecteur de vide (27), qui est relié à la commande (8), la commande (8) étant configurée pour détecter une déchirure de feuille au regard d'une loi de variation de la pression.

2. Machine de fermeture de barquettes selon la revendication 1, **caractérisée en ce que** l'outil en dôme (15) présente une pluralité de canaux de purge d'air (21) .

3. Machine de fermeture de barquettes selon l'une des revendications précédentes, **caractérisée en ce que** l'outil en dôme (15) présente une surface de scellage (15b) .

4. Machine de fermeture de barquettes selon la revendication 3, **caractérisée en ce que** l'outil en dôme (15) peut être déplacé entre une position supérieure pour le formage de la feuille supérieure (3) personnalisable, et une position inférieure pour sceller la feuille supérieure (3) sur une bordure de barquette (101) d'au moins une barquette (100).

5. Machine de fermeture de barquettes selon l'une des revendications précédentes, **caractérisée en ce qu'**il est prévu un joint d'étanchéité (23) au niveau d'une zone de transition entre le premier canal (19) de l'outil en dôme (15) vers le deuxième canal (20) de la partie supérieure d'outillage (7).

6. Procédé pour assurer le fonctionnement d'une machine de fermeture de barquettes (1), d'après lequel la machine de fermeture de barquettes (1) comprend une commande (8) ainsi qu'un poste de scellage (2), qui englobe une partie supérieure d'outillage (7), un cadre de serrage (13) et une partie inférieure d'outillage (6),
la partie supérieure d'outillage (7) accueillant un outil en dôme (15) pour le formage d'une feuille supérieure (3) personnalisable,
l'outil en dôme (15) présentant au moins un premier canal (19),
la partie supérieure d'outillage (7) présentant un deuxième canal (20),
l'outil en dôme (15) présentant une surface d'appui intérieure (15a),
et le cadre de serrage (13) étant configuré pour serrer, de manière étanche aux gaz, la feuille supérieure (3) contre la partie supérieure d'outillage (7), en vue de former une chambre supérieure (14) à l'intérieur de la partie supérieure d'outillage (7),
**caractérisé en ce qu'**à l'aide d'un détecteur de vide (27), qui est prévu entre l'outil en dôme (15) et un générateur de vide (26), on mesure une dépression, et la commande (8) détecte une déchirure de feuille au regard d'une loi de variation de la pression.

7. Procédé selon la revendication 6, **caractérisé en ce que** dans le cas de la détection d'une déchirure de feuille, la commande (8) affiche un message sur un écran de visualisation (28).

8. Procédé selon l'une des revendications 6 à 7, **caractérisé en ce que** dans le cas de la détection d'une déchirure de feuille, la commande (8) ne démarre pas ou interrompt une opération de scellage.

9. Procédé selon l'une des revendications 6 à 8, **caractérisé en ce que** dans le cas de la détection d'une déchirure de feuille, on procède à la purge de la partie supérieure d'outillage (7), et la feuille supérieure (3) est avancée dans la direction de transport (P) pour pouvoir aspirer et former un tronçon suivant de la feuille supérieure (3) dans l'outil en dôme (15).

10. Procédé selon l'une des revendications précédentes 6 à 9, **caractérisé en ce que** l'on détecte l'application de la feuille supérieure (3) contre la surface d'appui intérieure (15a) de l'outil en dôme (15), au moyen de la loi de variation de la pression.
